# EUROPEAN PATENT APPLICATION

(11) **EP 4 734 209 A1**
(43) Date of publication of application: **29.04.2026**
(21) Application number: 24841928.5
(22) Date of filing: 27.02.2024
(51) Int. Cl.: H01M 10/056

(54) **LITHIUM SECONDARY BATTERY AND ELECTRIC DEVICE**

(30) Priority: 18.07.2023 CN 202310883089
(71) Applicant: Contemporary Amperex Technology Co., Limited, Ningde, Fujian 352100 (CN)
(72) Inventor: ZHANG, Cuiping, Ningde, Fujian 352100 (CN); HAN, Changlong, Ningde, Fujian 352100 (CN); WU, Zeli, Ningde, Fujian 352100 (CN); HUANG, Lei, Ningde, Fujian 352100 (CN); GUO, Jie, Ningde, Fujian 352100 (CN); FAN, Peng, Ningde, Fujian 352100 (CN); JIANG, Bin, Ningde, Fujian 352100 (CN); ZHANG, Zhe, Ningde, Fujian 352100 (CN)
(74) Representative: Jacob, Reuben Ellis
(86) International application number: PCT/CN2024/078834
(87) International publication number: WO 2025/015923

(57) **Abstract**

Provided in the present application are a lithium secondary battery and an electric device. The lithium secondary battery comprises an electrolyte and a negative electrode sheet, wherein the electrolyte comprises a chain carboxylic ester and a cyclic carbonate, and the negative electrode sheet comprises a negative electrode current collector and a negative electrode film layer located on at least one side of the negative electrode current collector. Based on the total mass of the electrolyte, the mass content W1 of the chain carboxylic ester and the mass content W2 of the cyclic carbonate satisfy: 0.1 ≤ W2/W1 ≤ 2, and the mass content W1 of the chain carboxylic ester and the thickness H of the negative electrode film layer satisfy: 0.2 ≤ H/100W1 ≤ 20, with the unit of H being µm.The lithium secondary battery has good fast charging performance and cycling performance.

## Description

### CROSS-REFERENCE

The present application refers to Chinese Patent Application No. 202310883089.X filed on July 18, 2023, and entitled "LITHIUM SECONDARY BATTERY AND ELECTRIC DEVICE", which is incorporated herein by reference in its entirety.

### TECHNICAL FIELD

The present application relates to the technical field of lithium batteries, and in particular, to a lithium secondary battery and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace. In addition, requirements for the electrical performance of secondary batteries are continuously increasing, and there is an increasingly high demand for the charging rate of secondary batteries.

The properties of the electrolytic solution have a critical influence on the performance of the secondary batteries. An electrolytic solution with a suitable composition can improve the electrical performance or charging rate of the secondary battery and meet the diverse performance requirements for batteries across different fields. Therefore, there is still a need to develop an electrolytic solution to meet the application needs of a new generation of electrochemical systems.

### SUMMARY

The present application is made in view of the above problems, and an objective thereof is to provide a lithium secondary battery having excellent fast charging performance and cycle performance.

To achieve the above objective, a first aspect of the present application provides a lithium secondary battery. The lithium secondary battery includes an electrolytic solution and a negative electrode plate, where the electrolytic solution includes a chain carboxylate and a cyclic carbonate, and the negative electrode plate includes a negative electrode current collector and a negative electrode film layer located on at least one side of the negative electrode current collector;

based on the total mass of the electrolytic solution, the mass content W1 of the chain carboxylate and the mass content W2 of the cyclic carbonate satisfy: 0.1 ≤ W2/W1 ≤ 2, and the mass content W1 of the chain carboxylate and the thickness H of the negative electrode film layer satisfy: 0.2 ≤ H/100W1 ≤ 20, where H is expressed in µm.

The chain carboxylate introduced into the electrolytic solution can significantly reduce the viscosity of the electrolytic solution and improve the ability of the electrolytic solution to infiltrate the negative electrode plate, such that the liquid phase transmission rate of lithium ions is increased and the migration resistance of lithium ions is reduced, thereby significantly improving the fast charging performance of the lithium secondary battery. Meanwhile, controlling the mass content W1 of the chain carboxylate to satisfy the above relationships with the mass content W2 of the cyclic carbonate and the thickness H of the negative electrode film layer can allow the cyclic carbonate to be reduced on the surface of the negative electrode plate to form a passivation layer and thereby to reduce the side reactions between the metallic lithium at the negative electrode plate side and the chain carboxylate during the cycling of the lithium secondary battery, and can also reduce the degree of lithium plating at the negative electrode caused by insufficient infiltration of the electrolytic solution to enable the lithium secondary battery to achieve a balance between the fast charging performance and the cycle performance.

In any embodiment, the electrolytic solution further includes a sulfate compound, and based on the total mass of the electrolytic solution, the mass content W1 of the chain carboxylate and the mass content W3 of the sulfate compound satisfy: 0.005 ≤ W3/W1 ≤ 0.4.

The sulfate compound can undergo oxidation reactions at the positive electrode plate side of the lithium secondary battery preferentially over the chain carboxylate, and the oxide is deposited at the interface of the positive electrode plate to form an electrochemical interface (CEI) film, which can reduce the degree of the oxidation reaction of the chain carboxylate at the positive electrode plate side under high voltage, reduce the loss of the chain carboxylate, and decrease gas production, thus further improving the fast charging performance and the storage performance of the lithium secondary battery.

In any embodiment, the chain carboxylate includes one or more of ethyl formate, ethyl acetate, methyl acetate, methyl propionate, ethyl propionate, propyl propionate, propyl acetate, butyl formate, and methyl butyrate, and optionally includes one or more of ethyl formate, methyl acetate, ethyl acetate, methyl propionate, ethyl propionate, and propyl propionate.

The chain carboxylate described above has a relatively low viscosity due to the number of carbon atoms in its main chain being less than 5, so that the viscosity of the electrolytic solution can be significantly reduced, the liquid phase transmission rate of the lithium ions can be increased, and thereby the electrical conductivity of the electrolytic solution can be increased, which is beneficial to improving the fast charging performance of the lithium secondary battery.

In any embodiment, the cyclic carbonate includes one or more of ethylene carbonate, propylene carbonate, and fluoroethylene carbonate, and optionally includes one or more of ethylene carbonate and fluoroethylene carbonate.

The cyclic carbonate described above can be reduced at the negative electrode plate side to form a passivation layer, which reduces the side reactions between the chain carboxylate and the metallic lithium and improves the cycle performance and the storage performance of the lithium secondary battery.

In any embodiment, the sulfate compound includes one or more of a compound having a structure represented by formula I, a compound having a structure represented by formula II, diethyl sulfate, dimethyl sulfate, and dihydro-1,3,2-dioxathiolo(1,3,2)dioxathiole 2,2,5,5-tetraoxide, 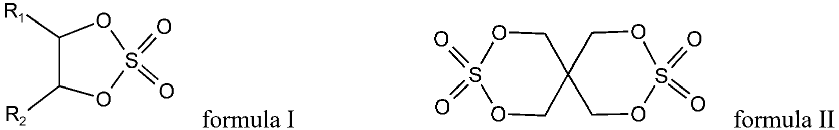 where R₁ and R₂ each independently include a hydrogen atom, C₁₋₆ alkyl, 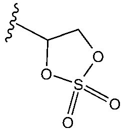 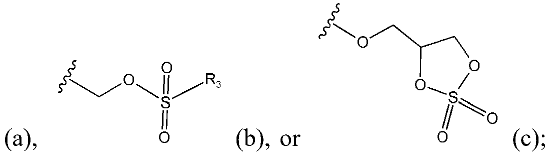 R₃ includes C₁₋₆ alkyl; optionally, the sulfate compound includes one or more of 4,4'-bis(ethylene sulfate), ethylene sulfate, diethyl sulfate, dimethyl sulfate, and dihydro-1,3,2-dioxathiolo(1,3,2)dioxathiole 2,2,5,5-tetraoxide.

The sulfate compounds described above all can participate in the formation of a CEI film at the positive electrode plate side, thereby reducing the degree of oxidation reactions of the chain carboxylate and improving the fast charging performance and the storage performance of the battery.

In any embodiment, based on the total mass of the electrolytic solution, the mass content W1 of the chain carboxylate is 5%-75%, optionally 20%-75%.

Controlling the mass content of the chain carboxylate to be within an appropriate range can significantly reduce the viscosity of the electrolytic solution, increase the liquid phase transmission rate of lithium ions, and thereby increase the electrical conductivity of the electrolytic solution, thereby facilitating the improvement of the fast charging performance of the lithium secondary battery. It can also reduce the severity of the side reactions between the chain carboxylate and the metallic lithium at the negative electrode plate side.

In any embodiment, based on the total mass of the electrolytic solution, the mass content W2 of the cyclic carbonate is 5%-40%, optionally 10%-30%.

Controlling the mass content of the cyclic carbonate to be within an appropriate range can provide sufficient cyclic carbonate to dissociate the lithium salt in the electrolytic solution and form a passivation layer on the surface of the negative electrode plate, thereby improving the electrical conductivity of the electrolytic solution. It can also reduce the impact of excessive cyclic carbonate introduced on the viscosity of the electrolytic solution, thereby comprehensively improving the fast charging performance of the lithium secondary battery.

In any embodiment, based on the total mass of the electrolytic solution, the mass content W3 of the sulfate compound is 0.1%-2%, optionally 0.1%-1%.

Controlling the mass content of the sulfate compound to be within an appropriate range can provide sufficient sulfate compounds to participate in the formation of the CEI film at the positive electrode plate side and inhibit the oxidation reactions of the carboxylate, thereby improving the fast charging performance of the lithium secondary battery. It can also avoid the increase in the production cost of the lithium secondary battery caused by the introduction of excessive sulfate compounds.

In any embodiment, the thickness of the negative electrode film layer is 10 µm to 100 µm, optionally 20 µm to 70 µm.

Controlling the thickness of the negative electrode film layer to be within an appropriate range can balance the fast charging performance and the energy density of the battery.

In any embodiment, the electrolytic solution further includes a lithium salt, and the lithium salt includes lithium hexafluorophosphate (LiPF₆) and lithium bis(fluorosulfonyl)imide (LiFSI). In any embodiment, the molar concentration C1 of LiPF₆ and the molar concentration C2 of LiFSI satisfy: 0.8 mol/L ≤ C1 + C2 ≤ 1.3 mol/L, optionally 0.8 mol/L ≤ C1 + C2 ≤ 1.2 mol/L.

In any embodiment, the molar concentration C1 of LiPF₆ and the molar concentration C2 of LiFSI satisfy: 1 ≤ C1/C2 ≤ 5, optionally 1 ≤ C1/C2 ≤ 3.

LiFSI has a relatively high degree of dissociation in the electrolytic solution and can greatly improve the electrical conductivity of the electrolytic solution at room temperature. However, at the same time, LiFSI has the risk of corroding the positive electrode current collector aluminum foil. The degree of dissociation of LiPF₆ in the electrolytic solution is lower than that of LiFSI in the electrolytic solution, but LiPF₆ has the effect of passivating the aluminum foil and inhibiting the corrosion of the aluminum foil. When the molar concentration of LiFSI and the molar concentration of LiPF₆ are controlled to satisfy a certain relationship, the electrical conductivity of the electrolytic solution can be improved to facilitate the improvement in the fast charging performance of the lithium secondary battery, and the risk of corrosion of the aluminum foil can also be reduced to improve the safety of the lithium secondary battery.

In any embodiment, the molar concentration C1 of LiPF₆ is 0.2 mol/L to 1.2 mol/L, optionally 0.2 mol/L to 1.1 mol/L. In any embodiment, the molar concentration C2 of LiFSI is 0.1 mol/L to 1 mol/L, optionally 0.2 mol/L to 1 mol/L.

Controlling the molar concentrations of LiFSI and LiPF₆ to be each within an appropriate range helps to balance the fast charging performance and the safety of the lithium secondary battery.

In any embodiment, the electrolytic solution further includes an additive. The additive includes one or more of lithium difluorophosphate, lithium fluorosulfonate, trimethylphosphite, vinylene carbonate, lithium tetrafluoroborate, lithium difluorobis(oxalato)phosphate, tris(trimethylsilyl)borate, trimethylfluorosilane, adiponitrile, and butanedinitrile, and optionally includes one or more of lithium difluorophosphate, lithium fluorosulfonate, lithium tetrafluoroborate, and lithium difluoro(oxalato)borate.

All the additives above can participate in the formation of the CEI film at the positive electrode plate side or the solid electrolyte interface (SEI) film at the negative electrode plate side, so that the direct contact between the chain carboxylate and the positive electrode plate or the metallic lithium is reduced, and thereby the consumption of active lithium and the reductive decomposition of the electrolytic solution are reduced. Lithium difluorophosphate, lithium fluorosulfonate, trimethylphosphite, vinylene carbonate, lithium tetrafluoroborate, or lithium difluorobis(oxalato)phosphate participate in the formation of the CEI film at the positive electrode plate side, and tris(trimethylsilyl)borate, trimethylfluorosilane, adiponitrile, or butanedinitrile participate in the formation of the SEI film at the negative electrode plate side.

In any embodiment, the lithium secondary battery includes a positive electrode plate, the positive electrode plate includes a positive electrode active material, and the positive electrode active material includes one or more of Li_{d}[NiₓCo_{y}X1_{z}M1_{1-x-y-z}]O_{2-S}, LiMn₂O₄, Li₂MnO₃·(1-a)LiAO₂, and LiM2X2O₄, where
0.1 ≤ d ≤ 1, 0 ≤ S ≤ 2, X1 includes Mn and/or Al, M1 includes one or more of Co, Ni, Mn, Mg, Cu, Zn, Al, Sn, B, Ga, Cr, Zr, Sr, V, and Ti, 0 ≤ x < 1, 0 ≤ y ≤ 1, 0 ≤ z ≤ 1, and x+y+z ≤ 1; A includes one or more of Ni, Co, and Mn, and 0 < a < 1; M2 includes one or more of Fe, Mn, Ni, and Co, X2 in X2O₄^{h-} includes one or more of S, P, As, V, Mo, and W, and h = 2 or 3.

The positive electrode active materials described above can all be used in combination with the electrolytic solution to obtain lithium secondary batteries with excellent fast charging performance and cycle performance.

In any embodiment, the negative electrode film layer includes a negative electrode active material, and the negative electrode active material includes one or more of artificial graphite, natural graphite, soft carbon, hard carbon, a mesocarbon microbead, a silicon-based material, and a tin-based material, and optionally includes one or more of artificial graphite and natural graphite.

The negative electrode film layers having the negative electrode active materials described above can all be used in combination with the electrolytic solution to obtain lithium secondary batteries with excellent fast charging performance and cycle performance.

In any embodiment, the compaction density of the negative electrode film layer is 0.9 g/cm³ to 1.6 g/cm³, optionally 1.1 g/cm³ to 1.6 g/cm³.

Controlling the compaction density of the negative electrode film layer to be within an appropriate range can not only meet the requirement for sufficient contact between the negative electrode active materials to allow the battery to have excellent electron transport performance and energy density, but also reduce the risk of hindering the intercalation and deintercalation of lithium ions caused by the pores between the negative electrode active materials being crushed during the preparation process.

A second aspect of the present application provides an electric device. The electric device includes the lithium secondary battery according to the first aspect of the present application.

### BRIEF DESCRIPTION OF THE DRAWINGS

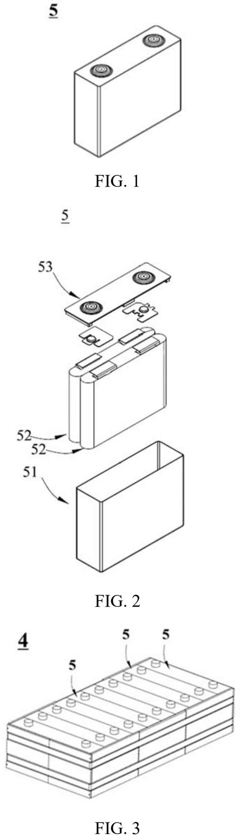

[0001] FIG. 1 is a schematic view of a lithium secondary battery according to one embodiment of the present application;
FIG. 2 is an exploded view of the lithium secondary battery according to one embodiment of the present application shown in FIG. 1;
FIG. 3 is a schematic view of a battery module according to one embodiment of the present application;
FIG. 4 is a schematic view of a battery pack according to one embodiment of the present application;
FIG. 5 is an exploded view of the battery pack according to one embodiment of the present application shown in FIG. 5; and
FIG. 6 is a schematic view of an electric device using a lithium secondary battery as a power source according to one embodiment of the present application.

### Description of the reference numerals:

1: battery pack; 2: upper case body; 3: lower case body; 4: battery module; 5: lithium secondary battery; 51: housing; 52: electrode assembly; 53: top cover assembly.

### DETAILED DESCRIPTION

Hereinafter, embodiments of the lithium secondary battery and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

The electrical conductivity of the electrolytic solution severely affects the performance of batteries. For example, for a lithium battery, a relatively low electrical conductivity may lead to adverse phenomena such as a decrease in the fast charging performance of the lithium battery. By introducing a low-viscosity solvent into the electrolytic solution to reduce the viscosity of the electrolytic solution system, the lithium ion transmission rate is increased and the electrical conductivity of the electrolytic solution is further increased. However, the introduction of the low-viscosity solvent brings other adverse effects. For example, a side reaction occurs between the chain carboxylate in the low-viscosity solvent and the precipitated metallic lithium, and it consumes a part of the metallic lithium and generates gas, thereby seriously affecting the cycle performance and the storage performance of the battery. Therefore, there is a need to design a new battery that can balance the fast charging performance and the cycle performance.

### [Lithium Secondary Battery]

Based on this, the present application provides a lithium secondary battery. The lithium secondary battery includes an electrolytic solution and a negative electrode plate. The electrolytic solution includes a chain carboxylate and a cyclic carbonate. The negative electrode plate includes a negative electrode current collector and a negative electrode film layer located on at least one side of the negative electrode current collector.

Based on the total mass of the electrolytic solution, the mass content W1 of the chain carboxylate and the mass content W2 of the cyclic carbonate satisfy: 0.1 ≤ W2/W1 ≤ 2, and the mass content W1 of the chain carboxylate and the thickness H (µm) of the negative electrode film layer satisfy: 0.2 ≤ H/100W1 ≤ 20.

Herein, the term "chain carboxylate" refers to a carboxylate with less than 5 carbon atoms in the main chain. In general, the longest carbon chain in the chain-like organic compound serves as the main chain. Herein, exemplary chain carboxylates include one or more of ethyl formate, ethyl acetate, methyl acetate, methyl propionate, ethyl propionate, propyl propionate, propyl acetate, butyl formate, and methyl butyrate. In some embodiments, the chain carboxylate includes one or more of ethyl formate, methyl acetate, ethyl acetate, methyl propionate, ethyl propionate, and propyl propionate.

Herein, "W2/W1" refers to the ratio between W2 and W1.

Herein, "H/100W1" refers to the ratio between the thickness H and 100 times W1.

In some embodiments, the cyclic carbonate includes one or more of ethylene carbonate, propylene carbonate, and fluoroethylene carbonate.the cyclic carbonate includes one or more of ethylene carbonate, propylene carbonate, and fluoroethylene carbonate. In some embodiments, the cyclic carbonate includes one or more of ethylene carbonate and fluoroethylene carbonate.

In some embodiments, based on the total mass of the electrolytic solution, the ratio of the mass content W1 of the chain carboxylate to the mass content W2 of the cyclic carbonate is optionally 0.1, 0.2, 0.4, 0.5, 0.6, 0.8, 1, 1.1, 1.2, 1.4, 1.5, 1.6, 1.8, 2, or a value in a range formed by any two of the above values.

In some embodiments, for the mass content W1 of the chain carboxylate in the electrolytic solution and the thickness H of the negative electrode film layer, H/100W1 is optionally 0.2, 0.4, 0.5, 1, 2, 3, 4, 5, 6, 7, 8, 9, 10, 11, 12, 13, 14, 15, 16, 17, 18, 19, 20, or a value in a range formed by any two of the above values.

The chain carboxylate has a relatively low viscosity and a relatively low melting point, and the introduction of the chain carboxylate into the electrolytic solution can significantly reduce its viscosity, which is beneficial to improving the liquid phase transmission rate of lithium ions, thereby improving the electrical conductivity of the electrolytic solution and improving the fast charging performance of the lithium secondary battery. However, the chain carboxylate is also prone to have a side reaction with the metallic lithium precipitated from the negative electrode plate side, which not only consumes the chain carboxylate and the metallic lithium and affects the cycle performance of the battery, but also generates gas, resulting in the swelling of the lithium secondary battery and affecting the transmission of lithium ions and the storage performance of the lithium secondary battery.

The cyclic carbonate added to the electrolytic solution may be reduced on the surface of the negative electrode plate to form a passivation layer, thereby reducing the degree of side reactions between the metallic lithium at the negative electrode plate side and the chain carboxylate, and improving the cycle performance and the storage performance of the lithium secondary battery. Controlling the ratio of the chain carboxylate and the cyclic carbonate can not only improve the electrical conductivity of the electrolytic solution, but also help to inhibit the side reaction between the chain carboxylate and the metallic lithium, so that the lithium secondary battery has good fast charging performance, cycle performance, and storage performance.

In addition, to improve the energy density of the lithium secondary battery, the coating thickness of the active material of the negative electrode gradually increases, resulting in a gradual decrease in the infiltration ability of the electrolytic solution. Poor infiltration ability of the electrolytic solution will result in the "broken bridge" phenomenon during lithium ion transmission. During charging, the non-infiltrated region of the negative electrode plate is an ineffective region, and lithium plating may occur in the infiltrated region of the negative electrode plate, leading to sharp deterioration of the cycle performance and the safety performance of the battery. After the chain carboxylate is introduced into the electrolytic solution, the decrease in viscosity of the electrolytic solution is beneficial to improving the ability of the electrolytic solution to infiltrate the negative electrode plate, thereby reducing the migration resistance of lithium ions and improving the fast charging performance of the lithium secondary battery. The thickness of the negative electrode film layer needs to be controlled within an appropriate range, so that both the energy density requirement and the fast charging performance requirement can be met. By controlling the mass content of the chain carboxylate and the thickness of the negative electrode film layer in the negative electrode plate to satisfy the above relationship, in one aspect, the electrolytic solution can quickly infiltrate the negative electrode film layer to improve the migration rate of lithium ions, such that the fast charging performance requirement of lithium secondary batteries can be met, and the degree of lithium plating at the negative electrode due to insufficient infiltration of the electrolytic solution can be reduced and thereby the influence of lithium dendrite generation on the cycle performance and the storage performance of lithium secondary batteries, and in another aspect, the severity of side reactions caused by excessive chain carboxylate can be reduced, or the energy density requirement of lithium secondary batteries can be met.

Herein, the term "fast charging performance" refers to the capacity retention rate of a lithium secondary battery in a high rate charging state.

In some embodiments, the electrolytic solution further includes a sulfate compound, and based on the total mass of the electrolytic solution, the mass content W1 of the chain carboxylate and the mass content W3 of the sulfate compound satisfy: 0.005 ≤ W3/W1 ≤ 0.4. In some embodiments, based on the total mass of the electrolytic solution, the mass content W1 of the chain carboxylate and the mass content W3 of the sulfate compound satisfy the following: W3/W1 is optionally 0.005, 0.006, 0.008, 0.01, 0.02, 0.04, 0.05, 0.06, 0.08, 0.1, 0.15, 0.2, 0.25, 0.3, 0.35, 0.4, or a value in a range formed by any two of the above values.

In some embodiments, the sulfate compound includes one or more of a compound having a structure represented by formula I, a compound having a structure represented by formula II, diethyl sulfate, dimethyl sulfate, and dihydro-1,3,2-dioxathiolo(1,3,2)dioxathiole 2,2,5,5-tetraoxide, 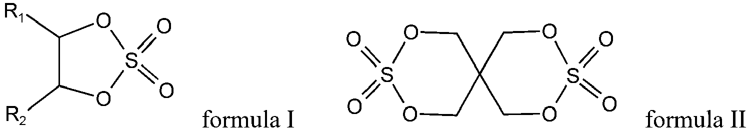 where R₁ and R₂ each independently include a hydrogen atom, C₁₋₆ alkyl, 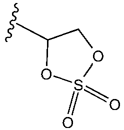 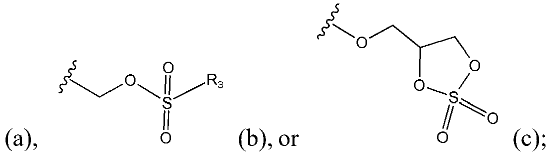 R₃ includes C₁₋₆ alkyl, and the C₁₋₆ alkyl includes one or more of methyl, ethyl, propyl, isopropyl, and n-butyl.

In some embodiments, the sulfate compound includes one or more of 4,4'-bis(ethylene sulfate), ethylene sulfate, diethyl sulfate, dimethyl sulfate, and dihydro-1,3,2-dioxathiolo(1,3,2)dioxathiole 2,2,5,5-tetraoxide.

Herein, dihydro-1,3,2-dioxathiolo(1,3,2)dioxathiole 2,2,5,5-tetraoxide has a CAS number of 496-45-7.

Herein, when R₁ in the formula I is selected from a hydrogen atom and R₂ is selected from 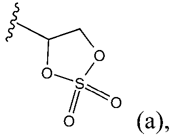 the resulting substance is 4,4'-bis(ethylene sulfate).

It can be understood that when a lithium secondary battery is charged, the chain carboxylate is prone to oxidation at the interface of the positive electrode plate to generate gas under high voltage, i.e., the phenomenon of "oxidation-induced gas production". This is because the transition metal ions in the positive electrode plate have a catalytic effect, and when the chain carboxylate is in contact with the positive electrode plate, they are prone to undergo oxidation reactions under the catalytic influence of the transition metal ions. However, the introduction of the sulfate compound can cause it to undergo oxidation reactions at the interface of the positive electrode plate preferentially over the chain carboxylate. The oxidation product is deposited at the interface of the positive electrode plate, that is, a CEI film is formed. The formation of the CEI film can isolate the direct contact between the chain carboxylate and the positive electrode plate, reduce the degree of the oxidation reaction of the chain carboxylate at the positive electrode plate side, reduce the loss of the chain carboxylate, and decrease gas production, thus further improving the fast charging performance and the storage performance of the lithium secondary battery.

In some embodiments, based on the total mass of the electrolytic solution, the mass content W1 of the chain carboxylate is 5%-75%. In some embodiments, based on the total mass of the electrolytic solution, the mass content W1 of the chain carboxylate is 20%-75%. In some embodiments, based on the total mass of the electrolytic solution, the mass content W1 of the chain carboxylate is optionally 5%, 10%, 15%, 20%, 25%, 30%, 35%, 40%, 45%, 50%, 55%, 60%, 65%, 70%, 75%, or a value in a range formed by any two of the above values.

Controlling the mass content of the chain carboxylate to be within an appropriate range can significantly reduce the viscosity of the electrolytic solution, increase the liquid phase transmission rate of lithium ions, and thereby increase the electrical conductivity of the electrolytic solution, thereby facilitating the improvement of the fast charging performance of the lithium secondary battery. It can also reduce the severity of the side reactions between the chain carboxylate and the metallic lithium at the negative electrode plate side.

In some embodiments, based on the total mass of the electrolytic solution, the mass content W2 of the cyclic carbonate is 5%-40%. In some embodiments, based on the total mass of the electrolytic solution, the mass content W2 of the cyclic carbonate is 10%-30%. In some embodiments, based on the total mass of the electrolytic solution, the mass content W2 of the cyclic carbonate is optionally 5%, 8%, 10%, 12%, 15%, 17%, 20%, 25%, 28%, 30%, 33%, 35%, 38%, 40%, or a value in a range formed by any two of the above values.

Controlling the mass content of the cyclic carbonate to be within an appropriate range can provide sufficient cyclic carbonate to dissociate the lithium salt in the electrolytic solution and form a passivation layer on the surface of the negative electrode plate, thereby improving the electrical conductivity of the electrolytic solution. It can also reduce the impact of excessive cyclic carbonate introduced on the viscosity of the electrolytic solution, thereby comprehensively improving the fast charging performance of the lithium secondary battery.

In some embodiments, based on the total mass of the electrolytic solution, the mass content W3 of the sulfate compound is 0.1%-2%. In some embodiments, based on the total mass of the electrolytic solution, the mass content W3 of the sulfate compound is 0.1%-1%.In some embodiments, based on the total mass of the electrolytic solution, the mass content W3 of the sulfate compound is optionally 0.1%, 0.2%, 0.4%, 0.5%, 0.6%, 0.8%, 1%, 1.1%, 1.2%, 1.4%, 1.5%, 1.6%, 1.8%, 2%, or a value in a range formed by any two of the above values.

Controlling the mass content of the sulfate compound to be within an appropriate range can provide sufficient sulfate compounds to participate in the formation of the CEI film at the positive electrode plate side and inhibit the oxidation reactions of the carboxylate, thereby improving the fast charging performance of the lithium secondary battery. It can also avoid the increase in the production cost of the lithium secondary battery caused by the introduction of excessive sulfate compounds.

In some embodiments, the thickness of the negative electrode film layer is 10 µm to 100 µm. In some embodiments, the thickness of the negative electrode film layer is 20 µm to 70 µm. In some embodiments, the thickness of the negative electrode film layer is optionally 10 µm, 20 µm, 30 µm, 40 µm, 50 µm, 60 µm, 70 µm, 80 µm, 90 µm, 100 µm, or a value in a range formed by any two of the above values.

Controlling the thickness of the negative electrode film layer to be within an appropriate range can balance the fast charging performance and the energy density of the battery.

In some embodiments, the electrolytic solution further includes linear carbonate, and the linear carbonate includes at least one of dimethyl carbonate, diethyl carbonate, dipropyl carbonate, ethyl methyl carbonate, methyl propyl carbonate, and ethyl propyl carbonate.

In some embodiments, the electrolytic solution further includes a lithium salt, and the lithium salt includes LiPF₆ and/or LiFSI.

In some embodiments, the molar concentration C1 of LiPF₆ and the molar concentration C2 of LiFSI satisfy: 0.8 mol/L ≤ C1 + C2 ≤ 1.3 mol/L. In some embodiments, the molar concentration C1 of LiPF₆ and the molar concentration C2 of LiFSI satisfy: 0.8 mol/L ≤ C1 + C2 ≤ 1.2 mol/L.

In some embodiments, the molar concentration C1 of LiPF₆ and the molar concentration C2 of LiFSI satisfy the following: C1 + C2 is optionally 0.8 mol/L, 0.85 mol/L, 0.9 mol/L, 0.95 mol/L, 1.0 mol/L, 1.05 mol/L, 1.1 mol/L, 1.15 mol/L, 1.2 mol/L, 1.25 mol/L, 1.3 mol/L, or a value in a range formed by any two of the above values.

In some embodiments, the molar concentration C1 of LiPF₆ and the molar concentration C2 of LiFSI satisfy: 1 ≤ C1/C2 ≤ 5. In some embodiments, the molar concentration C1 of LiPF₆ and the molar concentration C2 of LiFSI satisfy: 1 ≤ C1/C2 ≤ 3. In some embodiments, the molar concentration C1 of LiPF₆ and the molar concentration C2 of LiFSI satisfy the following: C1/C2 is optionally 1, 1.5, 2, 2.5, 3, 3.5, 4, 4.5, 5, or a value in a range formed by any two of the above values.

LiFSI has a relatively high degree of dissociation in the electrolytic solution and can greatly improve the electrical conductivity of the electrolytic solution at room temperature. However, LiFSI has the risk of corroding aluminum foil. The degree of dissociation of LiPF₆ in the electrolytic solution is lower than that of LiFSI in the electrolytic solution, but LiPF₆ has the effect of passivating the aluminum foil and inhibiting the corrosion of the aluminum foil. When the molar concentration of LiFSI and the molar concentration of LiPF₆ are controlled to satisfy a certain relationship, the electrical conductivity of the electrolytic solution can be improved to facilitate the improvement in the fast charging performance of the lithium secondary battery, and the risk of corrosion of the aluminum foil can also be reduced to improve the safety of the lithium secondary battery.

In some embodiments, the molar concentration C1 of LiPF₆ is 0.2 mol/L to 1.2 mol/L. In some embodiments, the molar concentration C1 of LiPF₆ is 0.2 mol/L to 1.1 mol/L. In some embodiments, the molar concentration C2 of LiFSI is 0.1 mol/L to 1 mol/L. In some embodiments, the molar concentration C2 of LiFSI is 0.2 mol/L to 1 mol/L. In some embodiments, the molar concentration C1 of LiPF₆ is optionally 0.2 mol/L, 0.3 mol/L, 0.4 mol/L, 0.5 mol/L, 0.6 mol/L, 0.7 mol/L, 0.8 mol/L, 0.9 mol/L, 1.0 mol/L, 1.1 mol/L, 1.2 mol/L, or a value in a range formed by any two of the above values, and the molar concentration C2 of LiFSI is optionally 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, 1 mol/L, or a value in a range formed by any two of the above values.

Controlling the molar concentrations of LiFSI and LiPF₆ to be each within an appropriate range can balance the fast charging performance and the safety of the lithium secondary battery.

In some embodiments, the electrolytic solution further includes an additive. The additive includes one or more of lithium difluorophosphate, lithium fluorosulfonate, trimethylphosphite, vinylene carbonate, lithium tetrafluoroborate, lithium difluorobis(oxalato)phosphate, tris(trimethylsilyl)borate, trimethylfluorosilane, adiponitrile, and butanedinitrile. In some embodiments, the additive includes one or more of lithium difluorophosphate, lithium fluorosulfonate, lithium tetrafluoroborate, and lithium difluoro(oxalato)borate.

All the additives above can participate in the formation of the CEI film at the positive electrode plate side or the SEI film at the negative electrode plate side, so that the direct contact between the chain carboxylate and the positive electrode plate or the metallic lithium is reduced, and thereby the consumption of active lithium and the reductive decomposition of the electrolytic solution are reduced. The participation of lithium difluorophosphate, lithium fluorosulfonate, trimethylphosphite, vinylene carbonate, lithium tetrafluoroborate, or lithium difluorobis(oxalato)phosphate in the formation of a CEI film at the positive electrode plate side is beneficial to reducing the oxidative decomposition of the electrolytic solution at the positive electrode plate side, thereby reducing the cathode interface impedance, facilitating the rapid deintercalation of lithium ions, and improving the fast charging performance. The reduction in the degree of oxidative decomposition can also reduce the swelling of the battery cell, reduce the consumption of active lithium, and improve the service life of the battery cell. The participation of tris(trimethylsilyl)borate, trimethylfluorosilane, adiponitrile, or butanedinitrile in the formation of an SEI film at the negative electrode plate side is beneficial to reducing the reductive decomposition of the electrolytic solution at the negative electrode plate side, decreasing gas production, and improving the electrical performance of the battery.

In some embodiments, the electrical conductivity of the electrolytic solution at 25 °C is 9 mS.cm to 15 mS.cm. The electrical conductivity of the electrolytic solution may be determined by measuring methods known in the art.

When the electrical conductivity of the electrolytic solution is within an appropriate range, both the fast charging performance and the storage performance of the lithium secondary battery can be balanced. If the electrical conductivity of the electrolytic solution is too low, the fast charging performance of the lithium secondary battery is seriously affected; if the electrical conductivity of the electrolytic solution is too high, the gas production rate will increase, which is not conducive to the storage performance of the lithium secondary battery.

In some embodiments, the electrolytic solution injection coefficient of the lithium secondary battery is 1.5 g/Ah to 4.0 g/Ah. In some embodiments, the electrolytic solution injection coefficient of the lithium secondary battery is optionally 1.5 g/Ah, 2 g/Ah, 2.5 g/Ah, 3 g/Ah, 3.5 g/Ah, 4.0 g/Ah, or a value in a range formed by any two of the above values.

Herein, the term "electrolytic solution injection coefficient" is the ratio of the mass (g) of the electrolytic solution to the capacity (Ah) of the battery cell.

Controlling the electrolytic solution injection coefficient of the lithium secondary battery to be within an appropriate range can not only provide enough electrolytic solution to meet the requirements of the lithium secondary battery, but also release a certain space to accommodate more positive electrode active materials/negative electrode active materials and thereby improve the energy density of the lithium secondary battery, or release a certain space for gas transfer to reduce the internal pressure of the housing of the lithium secondary battery and thereby improve the service life and the safety of the lithium secondary battery.

### [Positive Electrode Plate]

The positive electrode plate includes a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a positive electrode active material for use in batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more.

In some embodiments, the positive electrode active material includes one or more of Li_{d}[NiₓCo_{y}X1_{z}M1_{1-x-y-z}]O_{2-S}, LiMn₂O₄, Li₂MnO₃·(1-a)LiAO₂, and LiM2X2O₄, where

0.1 ≤ d ≤ 1, 0 ≤ S ≤ 2, X1 includes Mn and/or Al, M1 includes one or more of Co, Ni, Mn, Mg, Cu, Zn, Al, Sn, B, Ga, Cr, Zr, Sr, V, and Ti, 0 ≤ x < 1, 0 ≤ y ≤ 1, 0 ≤ z ≤ 1, and x+y+z ≤ 1; A includes one or more of Ni, Co, and Mn, and 0 < a < 1; M2 includes one or more of Fe, Mn, Ni, and Co, X2 in X2O₄^{h-} includes one or more of S, P, As, V, Mo, and W, and h = 2 or 3.

The positive electrode active materials described above can all be used in combination with the electrolytic solution to obtain lithium secondary batteries with excellent fast charging performance and cycle performance.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the compaction density of the positive electrode film layer of the positive electrode plate is 3.3 g/cm³ to 3.7 g/cm³.

Herein, the compaction density of the positive electrode film layer may be measured by any well-known measurement means. As an example, the compaction density of the film layer of the positive electrode plate is obtained by calculation. A positive electrode plate with a unit area S is weighed and the result is denoted as M1, the mass of the aluminum foil per unit area S is denoted as M2, the thickness of the positive electrode plate is measured as H1, and the thickness of the aluminum foil is denoted as H2. In this case, the compaction density of the positive electrode film layer is (M1 - M2)/((H1 - H2) × S).

When the compaction density of the positive electrode film layer is within an appropriate range, both the direct current impedance and the energy density of the lithium secondary battery can be balanced.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector and a negative electrode film layer located on at least one side of the negative electrode current collector and containing at least a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the negative electrode film layer includes a negative electrode active material. The negative electrode active material includes one or more of artificial graphite, natural graphite, soft carbon, hard carbon, a mesocarbon microbead, a silicon-based material, and a tin-based material. In some embodiments, the negative electrode film layer includes one or more of artificial graphite and natural graphite.

The negative electrode film layers having the negative electrode active materials described above can all be used in combination with the electrolytic solution to obtain lithium secondary batteries with excellent fast charging performance and cycle performance. In addition, because the artificial graphite or the natural graphite has a relatively large specific capacity and the graphite structure is stable and has a small expansion and contraction rate during lithium intercalation and deintercalation, the artificial graphite or the natural graphite has greater advantages as a negative electrode active material.

In some embodiments, the compaction density of the negative electrode film layer is 0.9 g/cm³ to 1.6 g/cm³. In some embodiments, the compaction density of the negative electrode film layer is 1.1 g/cm³ to 1.6 g/cm³. In some embodiments, the compaction density of the negative electrode film layer is optionally 0.9 g/cm³, 0.95 g/cm³, 1.0 g/cm³, 1.05 g/cm³, 1.1 g/cm³, 1.15 g/cm³, 1.2 g/cm³, 1.25 g/cm³, 1.3 g/cm³, 1.35 g/cm³, 1.4 g/cm³, 1.45 g/cm³, 1.5 g/cm³, 1.55 g/cm³, 1.6 g/cm³, or a value in a range formed by any two of the above values.

Controlling the compaction density of the negative electrode film layer to be within an appropriate range can not only meet the requirement for sufficient contact between the negative electrode active materials to allow the battery to have excellent electron transport performance and energy density, but also reduce the risk of hindering the intercalation and deintercalation of lithium ions caused by the pores between the negative electrode active materials being crushed during the preparation process.

In some embodiments, the negative electrode film layer further optionally includes a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may include at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Separator]

In some embodiments, the lithium secondary battery further includes a separator. Any porous-structure separator known to have good chemical stability and mechanical stability may be selected and used.

In some embodiments, the separator may be made of a material selected from at least one of glass fiber, non-woven fabric, polyethylene, polypropylene, and polyvinylidene difluoride. The separator may be a single-layer film or a multi-layer composite film. When the separator is a multi-layer composite film, the materials of the layers may be the same or different.

In some embodiments, the positive electrode plate, the negative electrode plate, and the separator may be manufactured into an electrode assembly through a winding process or a stacking process.

In some embodiments, the lithium secondary battery may include an outer packaging. The outer packaging can be used for packaging the electrode assembly and the electrolytic solution described above.

To alleviate the problem of the expansion force of the battery cell of the secondary battery, an expansion space may be reserved for the battery cell in design. Specifically, the group margin of the lithium secondary battery is controlled to be 82%-95%, and the group margin is the percentage of the thickness of the battery cell in the battery to the thickness of the inner cavity of the housing.

In some embodiments, the group margin of the lithium secondary battery is optionally 82%, 83%, 84%, 85%, 86%, 87%, 88%, 89%, 90%, 91%, 92%, 93%, 94%, 95%, or a value in a range formed by any two of the above values.

By controlling the group margin of the lithium secondary battery to be within an appropriate range, sufficient space is provided to accommodate the electrode assembly, while a certain space is provided for gas transfer, so that the internal pressure of the lithium secondary battery housing is reduced, and the service life and the safety of the lithium secondary battery are improved.

In some embodiments, the outer packaging of the lithium secondary battery may be a hard shell, such as a hard plastic shell, an aluminum shell, or a steel shell. The outer packaging of the lithium secondary battery may also be a soft pack, such as a pouch-type soft pack. The soft pack may be made of plastic, and examples of the plastic may include polypropylene, polybutylene terephthalate, polybutylene succinate, and the like.

The shape of the lithium secondary battery of the present application may be cylindrical, prismatic, or any other shape. For example, FIG. 1 shows a lithium secondary battery 5 having a prismatic structure as an example.

In some embodiments, referring to FIG. 2, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening in communication with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assemblies 52 included in the lithium secondary battery 5 may be one or more, and those skilled in the art can make a choice according to specific actual needs.

In some embodiments, the lithium secondary battery may be assembled into a battery module. The number of lithium secondary batteries included in the battery module may be one or more, and the specific number may be selected by those skilled in the art based on the use and capacity of the battery module.

FIG. 3 shows a battery module 4 as an example. Referring to FIG. 3, in the battery module 4, a plurality of lithium secondary batteries 5 may be sequentially arranged in a length direction of the battery module 4. Certainly, the arrangement may also be in any other manner. Further, the plurality of lithium secondary batteries 5 may be fixed by a fastener.

Optionally, the battery module 4 may further include a shell having an accommodating space in which the plurality of lithium secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

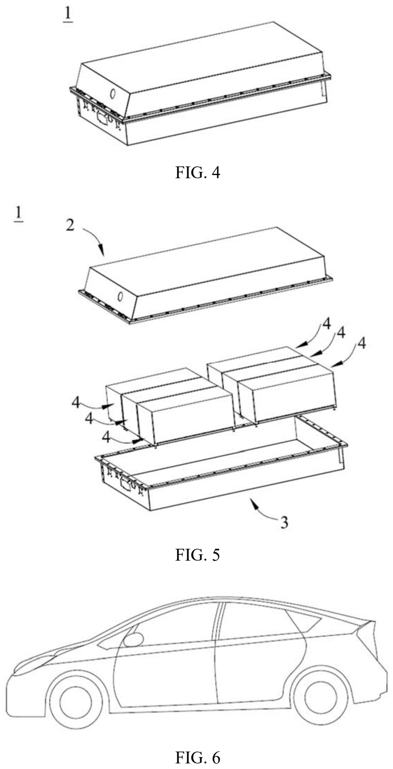

FIG. 4 and FIG. 5 show a battery pack 1 as an example. Referring to FIG. 4 and FIG. 5, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the lithium secondary battery, the battery module, or the battery pack provided in the present application. The lithium secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a lithium secondary battery, a battery module, or a battery pack may be selected based on its use requirements.

FIG. 6 shows an electric device as an example. The electric device is a pure electric vehicle, a hybrid electric vehicle, a plug-in hybrid electric vehicle, or the like. To meet the requirements of the electric device for high power and high energy density of the lithium secondary battery, a battery pack or a battery module may be used.

As another example, the device may be a mobile phone, a tablet computer, a laptop computer, or the like. The device is generally required to be light and thin, and a lithium secondary battery may thus be used as a power source.

### Examples

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### I. Preparation Method

### Example 1

### 1) Electrolytic solution

In a glove box under argon atmosphere (H₂O content < 10 ppm, and O₂ content < 1 ppm), 5 g of ethyl formate, 10 g of ethylene carbonate, and 71.13 g of ethyl methyl carbonate were well mixed to obtain a mixed solvent. Then, the lithium salt lithium hexafluorophosphate (LiPF₆) and the lithium salt lithium bis(fluorosulfonyl)imide (LiFSI) were added to the mixed solvent described above to achieve molar concentrations of 0.7 mol/L (8.75 g) and 0.3 mol/L (4.62 g), respectively, and the resulting mixture was stirred uniformly. Then, 0.5 g of 4,4'-bis(ethylene sulfate) was added, and the resulting mixture was stirred uniformly to obtain an electrolytic solution.

### 2) Preparation of positive electrode plate

The positive electrode active material LiNi_{0.5}Co_{0.2}Mn_{0.3}O₂, the conductive agent Super P, and the binder polyvinylidene difluoride (PVDF) were prepared into a positive electrode slurry in N-methylpyrrolidone (NMP). The solid content of the positive electrode slurry was 50 wt%, and the mass ratio of the solid components LiNi_{0.5}Co_{0.2}Mn_{0.3}O₂, Super P, and PVDF was 8:1:1. The positive electrode slurry was applied onto the negative electrode current collector aluminum foil and dried at 85 °C, followed by cold pressing, edge trimming, plate cutting, and slitting. Drying was then performed at 85 °C under vacuum for 4 h to obtain a positive electrode plate.

### 3) Preparation of negative electrode plate

The negative electrode active material graphite, the conductive agent Super P, the thickener carboxymethyl cellulose (CMC), and the binder styrene-butadiene rubber (SBR) were uniformly mixed in deionized water to obtain a negative electrode slurry. The solid content of the negative electrode slurry was 30 wt%, and the mass ratio of the solid components graphite, Super P, CMC, and binder styrene-butadiene rubber (SBR) was 80:15:3:2. The negative electrode slurry was applied onto the negative electrode current collector copper foil and dried at 85 °C, followed by cold pressing, edge trimming, plate cutting, and slitting. Drying was then performed at 120 °C for 12 h under vacuum to obtain a negative electrode plate with a negative electrode film layer thickness of 50 µm.

### 4) Separator

### A 16 µm polyethylene (PE) film was used as a separator.

### 5) Preparation of battery

The positive electrode plate, the separator, and the negative electrode plate were stacked in sequence, with the separator positioned between the positive electrode plate and the negative electrode plate to isolate the two. The stack was wound to obtain a bare cell. The bare cell was welded to the tabs and placed in an outer packaging, and the electrolytic solution prepared above was injected into the dried battery cell. After procedures such as packaging, standing, formation, shaping, and capacity testing, the lithium secondary battery product of Example 1 was obtained.

The secondary batteries of Examples 2-29 and the secondary batteries of Comparative Examples 1-6 were prepared using methods similar to that of Example 1, but the composition and product parameters of the battery electrode plates were adjusted. The different product parameters are detailed in Table 1 and Table 2;

The values of W1, W2, and W3 and the mass content of the additive can be adjusted by adjusting the mass content of ethyl methyl carbonate in the electrolytic solution.

### II. Performance Test

### 1. Compaction density of negative electrode film layer

The compaction density of the film layer of the negative electrode plate was obtained by calculation. A negative electrode plate with a unit area s was weighed and the result was denoted as m1, the mass of the copper foil per unit area s was denoted as m2, the thickness of the negative electrode plate was measured as h1, and the thickness of the copper foil was denoted as h2. In this case, the compaction density of the film layer of the negative electrode plate was (m1 - m2)/((h1 - h2) × s).

### 2. Fast charging performance of battery

The prepared battery was discharged to 2.8 V at 1C, then left to stand for 5 min, and charged to 4.25 V at 0.5C. The charge capacity C0 was recorded. Then, the prepared battery was discharged to 2.8 V at 1C, left to stand for 5 min, and charged to 4.25 V at 2C. The charge capacity C1 was recorded. The charge capacity retention rate of the battery was C1/C0 × 100%.

### 3. Cycle performance of battery

At 25 °C, the prepared battery was charged to 4.25 V at a constant current of 1C, then charged at a constant voltage of 4.25 V until the current dropped to 0.05C, left to stand for 10 min, and then discharged to 2.8 V at a constant current of 1C. This was the first charge/discharge cycle of the battery, and the discharge capacity of this cycle was recorded as the discharge capacity of the first cycle of the battery (C0). The above procedure was repeated for the same battery, the process capacity (C1) of the battery after 300 cycles was obtained, and the capacity retention rate after 300 cycles was C1/C0 × 100%. The test process of the comparative examples and other examples was the same as above.

### 4. Gas production performance of battery after storage

At 25 °C, the prepared full cell was left to stand for 30 min, charged to 4.2 V at a constant current of 0.1C, then charged to 0.05C at a constant voltage of 4.2 V, and then left to stand for 5 min, and subsequently, the volume V1 of the battery cell was measured by the water displacement method. After being stored at 60 °C for 30 days, the battery cell was taken out, cooled to 25 °C, charged to 4.2 V at 0.1C, and then charged to 0.05C at a constant voltage. The volume V2 of the battery was measured by the water displacement method. The volume expansion rate of the battery was (V2 - V1)/V1 × 100%.

### III. Analysis of Test Results of Examples and Comparative Examples

The batteries of the examples and comparative examples were prepared according to the methods described above, and various performance parameters were measured. The results are shown in Table 1 and Table 2 below.

**Table 1**

| No. | Electrolytic solution | | | | | | | | | |
|---|---|---|---|---|---|---|---|---|---|---|
| | Linear carboxylate | | Cyclic carbonate | | Sulfate | | W2/W1 | W3/W1 | Additive | |
| | Type | Mass content W1 | Type | Mass content W2 | Type | Mass content W3 | | | Substance | Mass content/% |
| Example 1 | Ethyl formate | 5% | Ethylene carbonate | 10% | 4,4'-bis(ethylene sulfate) | 0.5% | 2.00 | 0.1000 | / | / |
| Example 2 | Ethyl formate | 20% | Ethylene carbonate | 10% | 4,4'-bis(ethylene sulfate) | 0.5% | 0.50 | 0.0250 | / | / |
| Example 3 | Ethyl formate | 50% | Ethylene carbonate | 10% | 4,4'-bis(ethylene sulfate) | 0.5% | 0.20 | 0.0100 | / | / |
| Example 4 | Ethyl formate | 75% | Ethylene carbonate | 10% | 4,4'-bis(ethylene sulfate) | 0.5% | 0.13 | 0.0067 | / | / |
| Example 5 | Ethyl formate | 20% | Ethylene carbonate | 5% | 4,4'-bis(ethylene sulfate) | 0.5% | 0.25 | 0.0250 | / | / |
| Example 6 | Ethyl formate | 20% | Ethylene carbonate | 30% | 4,4'-bis(ethylene sulfate) | 0.5% | 1.50 | 0.0250 | / | / |
| Example 7 | Ethyl formate | 20% | Ethylene carbonate | 40% | 4,4'-bis(ethylene sulfate) | 0.5% | 2.00 | 0.0250 | / | / |
| Example 8 | Ethyl formate | 20% | Ethylene carbonate | 10% | 4,4'-bis(ethylene sulfate) | 0.5% | 0.50 | 0.0250 | / | / |
| Example 9 | Ethyl formate | 20% | Ethylene carbonate | 10% | 4,4'-bis(ethylene sulfate) | 0.5% | 0.50 | 0.0250 | / | / |
| Example 10 | Ethyl formate | 20% | Ethylene carbonate | 10% | 4,4'-bis(ethylene sulfate) | 0.5% | 0.50 | 0.0250 | / | / |
| Example 11 | Ethyl formate | 20% | Ethylene carbonate | 10% | 4,4'-bis(ethylene sulfate) | 0.5% | 0.50 | 0.0250 | / | / |
| Example 12 | Methyl acetate | 15% | Fluoroethylene carbonate | 2% | Substance having a structure represented by fonnula I, R₁ = b, R₂ = b, R₃ = methyl | 1.0% | 0.10 | 0.0667 | / | / |
| Example 13 | Methyl acetate | 15% | Fluoroethylene carbonate | 15% | Substance having a structure represented by fonnula I, R₁ = b, R₂ = b, R₃ = methyl | 1.0% | 1.00 | 0.0667 | / | / |
| Example 14 | Methyl acetate | 15% | Fluoroethylene carbonate | 30% | Substance having a structure represented by fonnula I, R₁ = b, R₂ = b, R₃ = methyl | 1.0% | 2.00 | 0.0667 | / | / |
| Example 15 | Ethyl acetate | 15% | Ethylene carbonate | 15% | Substance having a structure represented by formula I, R₁ = b, R₂ = b, R₃ = methyl | 1.0% | 1.00 | 0.0667 | / | / |
| Example 16 | Methyl propionate | 15% | Ethylene carbonate | 15% | Substance having a structure represented by formula I, R₁ = b, R₂ = b, R₃ = methyl | 1.0% | 1.00 | 0.0667 | / | / |
| Example 17 | Ethyl propionate | 15% | Ethylene carbonate | 15% | Substance having a structure represented by formula I, R₁ = b, R₂ = b, R₃ = methyl | 1.0% | 1.00 | 0.0667 | / | / |
| Example 18 | Propyl acetate | 15% | Ethylene carbonate | 15% | Substance having a structure represented by formula I, R₁ = b, R₂ = b, R₃ = methyl | 1.0% | 1.00 | 0.0667 | / | / |
| Example 19 | Ethyl formate | 5% | Ethylene carbonate | 10% | 4,4'-bis(ethylene sulfate) | 2.0% | 2.00 | 0.4000 | / | / |
| Example 20 | Ethyl formate | 10% | Ethylene carbonate | 10% | 4,4'-bis(ethylene sulfate) | 1.0% | 1.00 | 0.1000 | / | / |
| Example 21 | Ethyl formate | 20% | Ethylene carbonate | 10% | 4,4'-bis(ethylene sulfate) | 0.10% | 0.50 | 0.0050 | / | / |
| Example 22 | Ethyl formate | 5% | Ethylene carbonate | 10% | 4,4'-bis(ethylene sulfate) | 0.5% | 2.00 | 0.1000 | / | / |
| Example 23 | Ethyl formate | 10% | Ethylene carbonate | 10% | 4,4'-bis(ethylene sulfate) | 0.5% | 1.00 | 0.0500 | / | / |
| Example 24 | Ethyl formate | 50% | Ethylene carbonate | 10% | 4,4'-bis(ethylene sulfate) | 0.5% | 0.20 | 0.0100 | / | / |
| Example 25 | Ethyl formate | 20% | Ethylene carbonate | 10% | 4,4'-bis(ethylene sulfate) | 0.5% | 0.50 | 0.0250 | Lithium difluorophosphate | 0.1% |
| Example 26 | Ethyl formate | 20% | Ethylene carbonate | 10% | 4,4'-bis(ethylene sulfate) | 0.5% | 0.50 | 0.0250 | Lithium fluorosulfonate | 0.2% |
| Example 27 | Ethyl formate | 20% | Ethylene carbonate | 10% | 4,4'-bis(ethylene sulfate) | 0.5% | 0.50 | 0.0250 | / | / |
| Example 28 | Ethyl formate | 20% | Ethylene carbonate | 10% | 4,4'-bis(ethylene sulfate) | 0.5% | 0.50 | 0.0250 | / | / |
| Example 29 | Ethyl formate | 20% | Ethylene carbonate | 10% | 4,4'-bis(ethylene sulfate) | 0.5% | 0.50 | 0.0250 | / | / |
| Comparative Example 1 | Ethyl formate | 75% | Ethylene carbonate | 5% | 4,4'-bis(ethylene sulfate) | 0.5% | 0.07 | 0.0067 | / | / |
| Comparative Example 2 | Ethyl formate | 15% | Ethylene carbonate | 40% | 4,4'-bis(ethylene sulfate) | 0.5% | 2.67 | 0.0333 | / | / |
| Comparative Example 3 | Ethyl formate | 20% | Ethylene carbonate | 10% | 4,4'-bis(ethylene sulfate) | 0.5% | 0.50 | 0.0250 | / | / |
| Comparative Example 4 | Ethyl formate | 10% | Ethylene carbonate | 10% | 4,4'-bis(ethylene sulfate) | 0.5% | 0.50 | 0.0500 | / | / |

**Table 2**

| No. | Electrolytic solution | | | Negative electrode film layer | | | Battery | | |
|---|---|---|---|---|---|---|---|---|---|
| | Lithium salt | | C1/C2 | Thickness H/µm | H/100W1 | Compaction density of negative electrode (g/cm³) | Fast charging performance | Cycle performance | Gas production performance after storage |
| | Molar concentration C1 of LiPF₆/(mol/L) | Molar concentration C2 of LiFSI/(mol/L) | | | | | | | |
| Example 1 | 0.7 | 0.3 | 2.3 | 50 | 10.0 | 1.1 | 94.30% | 94.80% | 21% |
| Example 2 | 0.7 | 0.3 | 2.3 | 50 | 2.5 | 1.1 | 96.70% | 97.40% | 14% |
| Example 3 | 0.7 | 0.3 | 2.3 | 50 | 1.0 | 1.1 | 96.00% | 95.50% | 10% |
| Example 4 | 0.7 | 0.3 | 2.3 | 50 | 0.7 | 1.1 | 94.50% | 95.00% | 19% |
| Example 5 | 0.7 | 0.3 | 2.3 | 50 | 2.5 | 1.1 | 95.50% | 95.20% | 18% |
| Example 6 | 0.7 | 0.3 | 2.3 | 50 | 2.5 | 1.1 | 97.10% | 97.50% | 7% |
| Example 7 | 0.7 | 0.3 | 2.3 | 50 | 2.5 | 1.1 | 92.40% | 93.30% | 30% |
| Example 8 | 0.5 | 0.5 | 1 | 50 | 2.5 | 1.1 | 95.70% | 96.10% | 17% |
| Example 9 | 1 | 0.2 | 5 | 50 | 2.5 | 1.1 | 95.00% | 95.70% | 23% |
| Example 10 | 0.4 | 0.4 | 1 | 50 | 2.5 | 1.1 | 95.40% | 95.90% | 19% |
| Example 11 | 0.9 | 0.4 | 2.3 | 50 | 2.5 | 1.1 | 96.90% | 97.30% | 13% |
| Example 12 | 0.6 | 0.4 | 1.5 | 50 | 3.3 | 1.1 | 90.30% | 91.30% | 36% |
| Example 13 | 0.6 | 0.4 | 1.5 | 50 | 3.3 | 1.1 | 97.80% | 98.30% | 4% |
| Example 14 | 0.6 | 0.4 | 1.5 | 50 | 3.3 | 1.1 | 95.00% | 95.30% | 19% |
| Example 15 | 0.6 | 0.4 | 1.5 | 50 | 3.3 | 1.1 | 97.50% | 98.50% | 4% |
| Example 16 | 0.6 | 0.4 | 1.5 | 50 | 3.3 | 1.1 | 97.30% | 98.30% | 5% |
| Example 17 | 0.6 | 0.4 | 1.5 | 50 | 3.3 | 1.1 | 97.40% | 98.40% | 5% |
| Example 18 | 0.6 | 0.4 | 1.5 | 50 | 3.3 | 1.1 | 97.20% | 98.20% | 6% |
| Example 19 | 0.7 | 0.3 | 2.3 | 50 | 10.0 | 1.1 | 93.90% | 94.00% | 24% |
| Example 20 | 0.7 | 0.3 | 2.3 | 50 | 5.0 | 1.1 | 97.30% | 98.20% | 6% |
| Example 21 | 0.7 | 0.3 | 2.3 | 50 | 2.5 | 1.1 | 95.20% | 95.90% | 20% |
| Example 22 | 0.7 | 0.3 | 2.3 | 100 | 20.0 | 1.1 | 92.90% | 93.10% | 32% |
| Example 23 | 0.7 | 0.3 | 2.3 | 50 | 5.0 | 1.1 | 96.70% | 97.00% | 8% |
| Example 24 | 0.7 | 0.3 | 2.3 | 10 | 0.2 | 1.1 | 93.40% | 94.20% | 18% |
| Example 25 | 0.7 | 0.3 | 2.3 | 50 | 2.5 | 1.1 | 96.80% | 97.60% | 13% |
| Example 26 | 0.7 | 0.3 | 2.3 | 50 | 2.5 | 1.1 | 97.00% | 97.80% | 11% |
| Example 27 | 0.7 | 0.3 | 2.3 | 50 | 2.5 | 0.9 | 96.00% | 96.80% | 19% |
| Example 28 | 0.7 | 0.3 | 2.3 | 50 | 2.5 | 1.3 | 97.00% | 97.70% | 12% |
| Example 29 | 0.7 | 0.3 | 2.3 | 50 | 2.5 | 1.6 | 96.30% | 97.20% | 17% |
| Comparative Example 1 | 0.7 | 0.3 | 2.3 | 50 | 0.7 | 1.1 | 76.50% | 82.30% | 51% |
| Comparative Example 2 | 0.7 | 0.3 | 2.3 | 50 | 3.3 | 1.1 | 74.30% | 80.20% | 58% |
| Comparative Example 3 | 0.7 | 0.3 | 2.3 | 2 | 0.1 | 1.1 | 75.10% | 74.20% | 68% |
| Comparative Example 4 | 0.7 | 0.3 | 2.3 | 210 | 21.0 | 1.1 | 70.30% | 72.40% | 78% |

The lithium secondary batteries in Examples 1-29 all included an electrolytic solution and a negative electrode plate. The electrolytic solution included a chain carboxylate and a cyclic carbonate, and the negative electrode plate included a negative electrode current collector and a negative electrode film layer located on at least one side of the negative electrode current collector. Based on the total mass of the electrolytic solution, the mass content W1 of the chain carboxylate and the mass content W2 of the cyclic carbonate satisfied: 0.1 ≤ W2/W1 ≤ 2, and the mass content W1 of the chain carboxylate and the thickness H of the negative electrode film layer satisfied: 0.2 ≤ H/100W1 ≤ 20, where H was expressed in µm.

As can be seen from the comparison of Examples 1-7 and Examples 22-24 with Comparative Examples 1-4, based on the total mass of the electrolytic solution, controlling the mass content W1 of the chain carboxylate and the mass content W2 of the cyclic carbonate to satisfy 0.1 ≤ W2/W1 ≤ 2 and the mass content W1 of the chain carboxylate and the thickness H of the negative electrode film layer to satisfy 0.2 ≤ H/100W1 ≤ 20 is beneficial to improving the fast charging performance and the cycle performance of the lithium secondary battery, reducing the gas production rate after storage, and improving the storage performance of the lithium secondary battery.

As can be seen from the comparison of Examples 2-6 and Examples 23-24 with Examples 1 and 7, based on the total mass of the electrolytic solution, further controlling the mass content W1 of the chain carboxylate and the mass content W2 of the cyclic carbonate to satisfy 0.1 ≤ W2/W1 ≤ 1.5 is beneficial to further improving the storage performance of the battery.

As can be seen from Examples 1-4, based on the total mass of the electrolytic solution, the mass content W1 of the chain carboxylate was controlled to be 5%-75%, such that the lithium secondary battery had excellent fast charging performance, cycle performance, and storage performance. As can be seen from the comparison of Examples 2-4 with Example 1, based on the total mass of the electrolytic solution, further controlling the mass content W1 of the chain carboxylate to be 20%-75% is beneficial to further improving the fast charging performance, the cycle performance, and the storage performance of the lithium secondary battery.

As can be seen from Examples 2 and 5-7, based on the total mass of the electrolytic solution, the mass content W2 of the cyclic carbonate was controlled to be 5%-40%, such that the lithium secondary battery had excellent fast charging performance, cycle performance, and storage performance. As can be seen from the comparison of Examples 2 and 6 with Examples 5 and 7, based on the total mass of the electrolytic solution, further controlling the mass content W2 of the cyclic carbonate to be 5%-30% is beneficial to further improving the fast charging performance, the cycle performance, and the storage performance of the lithium secondary battery.

As can be seen from Examples 2 and 22-24, the thickness of the negative electrode film layer was controlled to be 10 µm to 100 µm, such that the lithium secondary battery had excellent fast charging performance, cycle performance, and storage performance.

As can be seen from Examples 2 and 8-11, the molar concentration C1 of LiPF₆ and the molar concentration C2 of LiFSI were controlled to satisfy 1 ≤ C1/C2 ≤ 5, such that the lithium secondary battery had excellent fast charging performance, cycle performance, and storage performance. As can be seen from the comparison of Examples 2, 8, and 10-11 with Example 9, further controlling the molar concentration C1 of LiPF₆ and the molar concentration C2 of LiFSI to satisfy 1 ≤ C1/C2 ≤ 3 is beneficial to further improving the fast charging performance, the cycle performance, and the storage performance of the lithium secondary battery.

As can be seen from Examples 2, 5-7, and 12-14, allowing the chain carboxylate to be optionally ethyl formate or methyl acetate, the cyclic carbonate to be optionally ethylene carbonate or fluoroethylene carbonate, and the sulfate compound to be optionally 4,4'-bis(ethylene sulfate) or the substance having a structure represented by formula I (R₁ = b, R₂ = b, and R₃ = methyl) can all enable the lithium secondary battery to have excellent fast charging performance, cycle performance, and storage performance. As can also be seen from Examples 2, 5-7, and 12-14, based on the total mass of the electrolytic solution, controlling the mass content W2 of the cyclic carbonate to be 5%-40% can balance the fast charging performance, the cycle performance, and the storage performance of the lithium secondary battery.

As can be seen from Examples 12-18, allowing the chain carboxylate to be optionally methyl acetate, ethyl acetate, methyl propionate, ethyl propionate, or propyl acetate, the cyclic carbonate to be optionally ethylene carbonate or fluoroethylene carbonate, and the sulfate compound to be optionally the substance having a structure represented by formula I (R₁ = b, R₂ = b, and R₃ = methyl) can also enable the lithium secondary battery to have excellent fast charging performance, cycle performance, and storage performance.

As can be seen from Examples 1-4 and 19-21, based on the total mass of the electrolytic solution, controlling the mass content W1 of the chain carboxylate and the mass content W3 of the sulfate compound to satisfy 0.005 ≤ W3/W1 ≤ 0.4 can enable the lithium secondary battery to have excellent fast charging performance, cycle performance, and storage performance. As can be seen from the comparison of Examples 1-4 and 20-21 with Example 19, based on the total mass of the electrolytic solution, further controlling the mass content W1 of the chain carboxylate and the mass content W3 of the sulfate compound to satisfy 0.005 ≤ W3/W1 ≤ 0.25 is beneficial to improving the fast charging performance, the cycle performance, and the storage performance of the lithium secondary battery.

As can be seen from Examples 1-4 and 19-21, based on the total mass of the electrolytic solution, controlling the mass content W3 of the sulfate compound to be 0.1%-2% can enable the lithium secondary battery to have excellent fast charging performance, cycle performance, and storage performance.

As can be seen from the comparison of Examples 25-26 with Example 2, the addition of the additive lithium difluorophosphate or lithium fluorosulfonate to the electrolytic solution is beneficial to improving the fast charging performance, the cycle performance, and the storage performance of the battery.

As can be seen from Examples 2 and 27-29, the compaction density of the negative electrode film layer was controlled to be 0.9 g/cm³ to 1.6 g/cm³, such that the lithium secondary battery had excellent fast charging performance, cycle performance, and storage performance. As can be seen from the comparison of Examples 2 and 28-29 with Example 27, further controlling the compaction density of the negative electrode film layer to be 1.1 g/cm³ to 1.6 g/cm³ is beneficial to further improving the fast charging performance, the cycle performance, and the storage performance of the battery.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A lithium secondary battery, comprising an electrolytic solution and a negative electrode plate, wherein the electrolytic solution comprises a chain carboxylate and a cyclic carbonate, and the negative electrode plate comprises a negative electrode current collector and a negative electrode film layer located on at least one side of the negative electrode current collector;
based on a total mass of the electrolytic solution, a mass content W1 of the chain carboxylate and a mass content W2 of the cyclic carbonate satisfy: 0.1 ≤ W2/W1 ≤ 2, and the mass content W1 of the chain carboxylate and a thickness H of the negative electrode film layer satisfy: 0.2 ≤ H/100W1 ≤ 20, wherein H is expressed in µm.

2. The lithium secondary battery according to claim 1, wherein the electrolytic solution further comprises a sulfate compound, and based on the total mass of the electrolytic solution, the mass content W1 of the chain carboxylate and a mass content W3 of the sulfate compound satisfy: 0.005 ≤ W3/W1 ≤ 0.4.

3. The lithium secondary battery according to claim 2, wherein the chain carboxylate comprises one or more of ethyl formate, ethyl acetate, methyl acetate, methyl propionate, ethyl propionate, propyl propionate, propyl acetate, butyl formate, and methyl butyrate, and optionally comprises one or more of ethyl formate, methyl acetate, ethyl acetate, methyl propionate, ethyl propionate, and propyl propionate; and/or
the cyclic carbonate comprises one or more of ethylene carbonate, propylene carbonate, and fluoroethylene carbonate, and optionally comprises one or more of ethylene carbonate and fluoroethylene carbonate; and/or
the sulfate compound comprises one or more of a compound having a structure represented by formula I, a compound having a structure represented by formula II, diethyl sulfate, dimethyl sulfate, and dihydro-1,3,2-dioxathiolo(1,3,2)dioxathiole 2,2,5,5-tetraoxide, 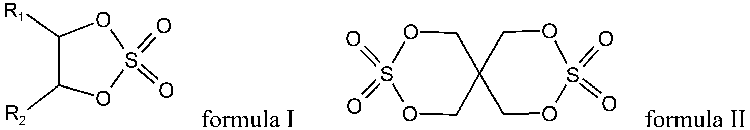
wherein R₁ and R₂ each independently comprise a hydrogen atom, C₁₋₆ alkyl, 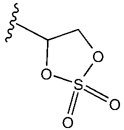 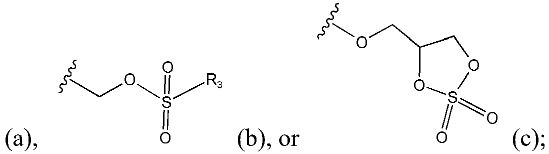 R₃ comprises C₁₋₆ alkyl;
optionally, the sulfate compound comprises one or more of 4,4'-bis(ethylene sulfate), ethylene sulfate, diethyl sulfate, dimethyl sulfate, and dihydro-1,3,2-dioxathiolo(1,3,2)dioxathiole 2,2,5,5-tetraoxide.

4. The lithium secondary battery according to claim 2 or 3, wherein based on the total mass of the electrolytic solution, the mass content W1 of the chain carboxylate is 5%-75%, optionally 20%-75%;
based on the total mass of the electrolytic solution, the mass content W2 of the cyclic carbonate is 5%-40%, optionally 10%-30%; and/or
based on the total mass of the electrolytic solution, the mass content W3 of the sulfate compound is 0.1%-2%, optionally 0.1%-1%.

5. The lithium secondary battery according to any one of claims 1 to 4, wherein the thickness of the negative electrode film layer is 10 µm to 100 µm, optionally 20 µm to 70 µm.

6. The lithium secondary battery according to any one of claims 1 to 5, wherein the electrolytic solution further comprises a lithium salt, and the lithium salt comprises lithium hexafluorophosphate (LiPF₆) and lithium bis(fluorosulfonyl)imide (LiFSI), wherein
a molar concentration C1 of LiPF₆ and a molar concentration C2 of LiFSI satisfy: 0.8 mol/L ≤ C1 + C2 ≤ 1.3 mol/L, optionally 0.8 mol/L ≤ C1 + C2 ≤ 1.2 mol/L; and/or
the molar concentration C1 of LiPF₆ and the molar concentration C2 of LiFSI satisfy: 1 ≤ C1/C2 ≤ 5, optionally 1 ≤ C1/C2 ≤ 3.

7. The lithium secondary battery according to claim 6, wherein the molar concentration C1 of LiPF₆ is 0.2 mol/L to 1.2 mol/L, optionally 0.2 mol/L to 1.1 mol/L;
the molar concentration C2 of LiFSI is 0.1 mol/L to 1 mol/L, optionally 0.2 mol/L to 1 mol/L.

8. The lithium secondary battery according to any one of claims 1 to 7, wherein the electrolytic solution further comprises an additive, and the additive comprises one or more of lithium difluorophosphate, lithium fluorosulfonate, trimethylphosphite, vinylene carbonate, lithium tetrafluoroborate, lithium difluorobis(oxalato)phosphate, tris(trimethylsilyl)borate, trimethylfluorosilane, adiponitrile, and butanedinitrile, and optionally comprises one or more of lithium difluorophosphate, lithium fluorosulfonate, lithium tetrafluoroborate, and lithium difluoro(oxalato)borate.

9. The lithium secondary battery according to any one of claims 1 to 8, wherein the lithium secondary battery comprises a positive electrode plate, the positive electrode plate comprises a positive electrode active material, and the positive electrode active material comprises one or more of Li_{d}[NiₓCo_{y}X1_{z}M1_{1-x-y-z}]O_{2-S}, LiMn₂O₄, Li₂MnO₃·(1-a)LiAO₂, and LiM2X2O₄, wherein
0.1 ≤ d ≤ 1, 0 ≤ S ≤ 2, X1 comprises Mn and/or Al, M1 comprises one or more of Co, Ni, Mn, Mg, Cu, Zn, Al, Sn, B, Ga, Cr, Zr, Sr, V, and Ti, 0 ≤ x < 1, 0 ≤ y ≤ 1, 0 ≤ z ≤ 1, and x+y+z ≤ 1; A comprises one or more of Ni, Co, and Mn, and 0 < a < 1; M2 comprises one or more of Fe, Mn, Ni, and Co, X2 in X2O₄^{h-} comprises one or more of S, P, As, V, Mo, and W, and h = 2 or 3.

10. The lithium secondary battery according to any one of claims 1 to 9, wherein the negative electrode film layer comprises a negative electrode active material, and the negative electrode active material comprises one or more of artificial graphite, natural graphite, soft carbon, hard carbon, a mesocarbon microbead, a silicon-based material, and a tin-based material, and optionally comprises one or more of artificial graphite and natural graphite.

11. The lithium secondary battery according to any one of claims 1 to 10, wherein a compaction density of the negative electrode film layer is 0.9 g/cm³ to 1.6 g/cm³, optionally 1.1 g/cm³ to 1.6 g/cm³.

12. An electric device, comprising the lithium secondary battery according to any one of claims 1 to 11.
